(19) Europäisches Patentamt / European Patent Office / Office européen des brevets

(11) **EP 2 990 097 A1**

(12) **DEMANDE DE BREVET EUROPEEN**

(43) Date de publication:
**02.03.2016 Bulletin 2016/09**

(21) Numéro de dépôt: **15181539.6**

(22) Date de dépôt: **19.08.2015**

(51) Int Cl.:
*B01D 53/94* (2006.01)   *B01J 23/00* (2006.01)
*B01J 23/10* (2006.01)   *F01N 3/28* (2006.01)
*F01N 3/035* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **29.08.2014 FR 1458121**

(71) Demandeurs:
- **PEUGEOT CITROËN AUTOMOBILES S.A.**
  **78140 Vélizy Villacoublay (FR)**
- **Centre National de la Recherche Scientifique**
  **75016 Paris (FR)**
- **Ceramiques Techniques Industrielles CTI**
  **30340 Salindres (FR)**
- **Université Claude Bernard Lyon 1**
  **69622 Villeurbanne Cedex (FR)**

(72) Inventeurs:
- **PAJOT, KARINE**
  **91370 VERRIERES LE BUISSON (FR)**
- **CARTOIXA, Bruno**
  **30340 Salindres (FR)**
- **BLANCHARD, GILBERT**
  **92100 BOULOGNE BILLANCOURT (FR)**
- **STEIL, Cesar**
  **38500 Saint Martin d Hères (FR)**
- **VERNOUX, Philippe**
  **69270 ROCHETAILLEE SUR SAONE (FR)**
- **SERVE, Adrien**
  **69160 Tassin la Demi-Lune (FR)**

(54) **FILTRE À PARTICULES CATALYSÉ**

(57) L'invention concerne un filtre à particules (1) comprenant un substrat filtrant en céramique poreuse et une phase catalytique, tel que la phase catalytique comprend un oxyde d'au moins une terre rare et/ou d'au moins un métal de transition et un oxyde de structure pérovskite de formulation

$La_{1-x-z} B_z A_x C O_3$ ou $La_{1-x-z} B_z A_x C_{1-y} B_y O_3$, avec :
- A choisi parmi les métaux alcalins, alcalino-terreux et de transition,
- C choisi parmi Mn, Fe, Ce, Cu et Mo, ou toute combinaison entre deux au moins de ces éléments,
- B étant Ag.

FIG.1

EP 2 990 097 A1

**Description**

L'invention concerne les filtres à particules, notamment ceux équipant les lignes d'échappement de moteurs thermiques, et plus particulièrement les lignes d'échappement de moteurs thermiques de véhicules du type véhicule automobile et plus particulièrement les filtres à particules disposés en aval d'un dispositif de traitement des NOx, de type catalyseur 3 voies, réduction catalytique sélective (dont l'acronyme anglais est « SCR » pour « Selective Catalytic Reduction »), piège à $NO_x$,....

Les moteurs thermiques de type essence ou diesel produisent des particules, l'émission de particules étant généralement plus importante dans le cas des moteurs diesel que dans celui des moteurs à essence. De fait, les lignes d'échappement de moteurs thermiques incluent le plus souvent, au moins quand il s'agit de moteurs diesel, un filtre à particules destiné à piéger des particules solides. Pour éviter l'encrassement du filtre à particules, celui-ci doit être régénéré par brûlage des particules piégées.

De façon connue, les filtres à particules sont, par exemple, constitués d'une matrice minérale, de type céramique, de structure alvéolaire, définissant des canaux disposés sensiblement parallèlement à la direction générale d'écoulement des gaz d'échappement dans le filtre, et alternativement obturés du côté de la face d'entrée des gaz du filtre et du côté de la face de sortie des gaz du filtre, comme décrit dans le brevet EP - 2 426 326.

De façon connue également, et également décrit dans le brevet précité, on peut aussi conférer des fonctions supplémentaires au filtre à particules, notamment en déposant sur tout ou partie des parois des canaux, un ou plusieurs revêtements catalytiques. Il peut s'agir de revêtements de type catalyseur d'oxydation, apte à diminuer les émissions de monoxyde de carbone (CO) et d'hydrocarbures (HC) par oxydation, et/ou encore de revêtements de type catalyseur de réduction des oxydes d'azote du type NOx, notamment ceux catalysant la réduction des NOx avec injection dans la ligne d'échappement en amont du filtre d'un réducteur du type ammoniac gazeuse ou urée liquide. On peut aussi citer les revêtements de type piège à NOx, qui deviennent actifs vis-à-vis des NOx quand le moteur de type diesel passe temporairement en régime riche.

Selon une première approche, le brûlage des particules du filtre est réalisé périodiquement par augmentation de la température des gaz d'échappement, par exemple en injectant directement du carburant dans les gaz d'échappement. Dans le cas où un catalyseur d'oxydation (destiné à oxyder le monoxyde de carbone et les hydrocarbures imbrûlés) est disposé sur la ligne d'échappement en amont du filtre à particules, la combustion de ce carburant dans le catalyseur d'oxydation permet d'augmenter considérablement la température des gaz d'échappement au niveau du filtre à particules, température qui peut alors, au moins temporairement, atteindre des températures de plus de 550°C jusqu'à 600°C, et atteindre ainsi la température d'auto inflammation des suies. (On comprend dans le présent texte les termes « entrée »/« sortie », ou encore « amont »/« aval » en référence à la direction générale d'écoulement des gaz d'échappement destinés à traverser le filtre à particules, une fois celui-ci monté sur une ligne d'échappement d'un moteur thermique, depuis la sortie moteur jusqu'à la sortie des gaz à l'air libre en bout de ligne.) Pour déclencher une régénération du filtre à particules, on mesure généralement la perte de charge à l'intérieur du filtre à particules en mesurant la pression en amont et en aval. Lorsque la perte de charge dépasse un seuil, on considère que le filtre à particules a accumulé une quantité de suies suffisante et la régénération périodique du filtre à particules est initiée.

Pour limiter la durée des régénérations et la surconsommation en carburant induites par celles-ci, on peut abaisser la température d'auto-inflammation des suies. Pour ce faire, deux voies existent : On peut y parvenir en ajoutant un additif tel qu'une suspension de nanoparticules de cérium, de cérium et de fer ou de fer dans le carburant. Son efficacité est démontrée mais son utilisation requiert de stocker dans un réservoir additionnel une quantité suffisante d'additif pour assurer une autonomie d'au moins 120 000 km au véhicule pour satisfaire les normes en vigueur, et d'équiper le véhicule de moyens de dosage et d'injection (pompe, tuyauteries ...) de cet additif dans le carburant.

Une autre solution pour parvenir à abaisser la température d'auto-inflammation des suies dans le filtre consiste à le munir d'une composition catalytique. On parle alors de filtre catalysé. La composition catalytique fait appel, généralement, à des métaux rares ou à leurs composés, par exemple à base de platine ou à base d'oxydes mixtes de cérium, zirconium et praséodyme (dont des exemples sont notamment décrits dans les brevets FR2 698 346, FR 2 748 740, EP 2 288 249) ou à base d'un oxyde mixte de zirconium et d'yttrium, tel que l'oxyde commercialisé par la société TOSOH Corporation sous la référence commerciale Tosoh TZ-8Y. Il est également connu, notamment du brevet FR 2 961 407, des compositions catalytiques ayant recours à des oxydes de type pérovskites au manganèse.

L'efficacité de ces différents oxydes est encore susceptible d'amélioration, avec, notamment pour les oxydes contenant du praséodyme, une efficacité peu élevée à basse température, imposant des régénérations longues et une surconsommation non négligeable en carburant.

Plus on rend possible l'abaissement de la température d'auto-inflammation des suies, plus on peut espacer les régénérations périodiques, les rendre moins longues. En se rapprochant des températures des gaz d'échappement traversant le filtre à particules en conditions de roulage normales, il devient envisageable de concevoir des filtres à « auto-régénération », encore désignés sous le terme de filtres « à régénération continue », qui se régénèrent en continu et de façon transparente pour le conducteur.

L'invention a alors pour but d'améliorer la conception des filtres à particules. Elle vise notamment des filtres catalysés avec des compositions catalytiques qui soient plus efficaces, notamment en devenant actives à des températures proches des températures des gaz d'échappement en conditions de roulage normales.

L'invention a tout d'abord pour objet un filtre à particules comprenant un substrat filtrant en céramique poreuse et une phase catalytique, qui comprend un oxyde de terre(s) rare(s) et un oxyde métallique de structure pérovskite de formulation $La_{1-x-z} B_z A_x C O_3$ ou $La_{1-x} A_x C_{1-y} B_y O_3$ ou $La_{1-x-z} B_z A_x C_{1-y} B_y O_3$, avec

- A choisi parmi les métaux alcalins, alcalino-terreux et de transition,

- C choisi parmi Mn, Fe, Ce, Cu et Mo, ou toute combinaison entre au moins deux de ces éléments,

- B étant Ag.

Le filtre à particules de l'invention comprend de préférence un substrat filtrant en céramique poreuse et une phase catalytique, tel que la phase catalytique comprend un oxyde d'au moins une terre rare et/ou d'au moins un métal de transition et un oxyde de structure pérovskite de formulation La1-x-z Bz Ax C 03 ou La 1-x-z Bz Ax C 1-y By 03, avec :

A choisi parmi les métaux alcalins, alcalino-terreux et de transition,

C choisi parmi Mn, Fe, Ce, Cu et Mo, ou toute combinaison entre deux au moins de ces éléments,

B étant Ag.

De préférence, la formulation de l'oxyde de structure pérovskite respecte les indices suivants selon un mode de réalisation:

$$x \geq 0$$

$$1 - x - y \neq 0$$

$$1 - y \neq 0$$

$$y > 0$$

$$z > 0$$

La formulation de l'oxyde de structure pérovskite respecte de préférence l'indice suivant : y = 0 selon un autre mode de réalisation

La formulation de l'oxyde de structure pérovskite respecte l'indice suivant : x = 0 selon un mode de réalisation. Les autres indices peuvent dans ce cas respecter les conditions exprimées plus haut.

La formulation de l'oxyde de structure pérovskite respecte l'indice suivant : x > 0, avec x de préférence d'au plus 0,5, et notamment d'au moins 0,05, et de préférence compris entre 0,1 et 0,4, selon un autre mode de réalisation.

L'indice y est d'au plus 0,4, et notamment d'au moins 0,001, et de préférence compris entre 0,2 et 0,3 selon un mode de réalisation.

L'indice z est d'au plus 0,4, et notamment soit d'au moins 0,001, et de préférence compris entre 0,2 et 0,3 selon un mode de réalisation.

L'invention propose donc de combiner un oxyde mixte de terres rares avec une pérovskite particulière qui est préférentiellement de type LSAM (pérovskite au manganèse) ou préférentiellement de type LSAF (pérovskite au fer), dont le lanthane est partiellement échangé avec un autre métal, notamment Sr et/ou Ag, et dont le manganèse ou le fer est optionnellement échangé avec Ag. Ces deux types de composants paraissent donc, de façon surprenante, avoir des interactions entre eux, et présenter une synergie qui permet d'atteindre une efficacité remarquable et inattendue au vu des efficacités des deux composants séparément. Il apparait que cet effet de synergie soit obtenu parce qu'on associe un conducteur électronique (la perovskite) à un conducteur majoritairement ionique (l'oxyde mixte de terres rares).

Avec les filtres munis de phase catalytique contenant cette combinaison d'oxydes, il s'est avéré qu'on pouvait espacer les régénérations périodiques, voire atteindre une régénération en continu, la température à laquelle il commence à se régénérer étant abaissée au voisinage de 450 à 500°C, température atteinte par les gaz d'échappement des moteurs diesel (et a fortiori par ceux des moteurs essence) dans certaines conditions de roulage au moins, en régime stabilisé. C'est un point très avantageux, car limiter ou supprimer les régénérations périodiques limite ou évite la nécessité de surchauffer les gaz d'échappement périodiquement. Ces surchauffes ponctuelles de gaz d'échappement, destinées à enflammer périodiquement les suies, sont généralement obtenues notamment par des injections de carburant dans la chambre de combustion en phase de détente (injections supplémentaires qui ne sont pas à but de propulsion et qui sont généralement désignées sous le terme de « post-injection »), et/ou par des injections de carburant directement dans la ligne d'échappement en amont du filtre par un injecteur supplémentaire.

Dans les deux cas de figure, ces injections supplémentaires induisent une surconsommation de carburant, des adaptations du contrôle commande du moteur, éventuellement un injecteur supplémentaire, avec des contraintes importantes, puisque ces injections supplémentaires sont à réaliser en transparence pour le conducteur, qu'elles ne doivent pas provoquer d'émission supplémentaire de composés polluants et qu'elles ne peuvent être faites que dans certaines conditions de roulage. Parvenir à espacer, raccourcir ou même supprimer ces régénérations provoquées est donc excellent à tous points de vue. Une régénération continue, même modeste/partielle, permet de garder au filtre, entre deux régénérations, un taux d'encrassement moyen inférieur, donc une perte de charge plus faible dans la ligne d'échappement pour un meilleur fonctionnement du moteur thermique.

De préférence, l'oxyde d'au moins une terre rare et/ou d'au moins un métal de transition est choisi à base d'un des oxydes d'au moins un des éléments suivants : Zr, Y, Ce et tous les lanthanides, et est notamment choisi à base d'oxyde mixte du type $CeZrO_2$ ou $CePrO_2$ ou $CeO_2$. Dans le cas de l'oxyde de cérium notamment, on privilégie un oxyde de cérium conservant une grande surface spécifique, après traitement thermique selon l'application, d'un minimum de 50 $m^2$/g.

Selon un mode de réalisation, A est choisi en Sr, et/ou B est choisi en Ag et/ou C est choisi en Mn.

De préférence, la formulation est la suivante : $La_{1-x-z} Ag_z Sr_x Mn_{1-y} Ag_y O_3$.

Selon un exemple conforme à l'invention, la formulation de l'oxyde métallique de structure pérovskite est $La_{0,5} Ag_{0,25} Sr_{0,25} MnO_3$.

Cet exemple est conforme à la variante selon l'invention $La_{1-x-z} B_z A_x CO_3$, avec C = Mn, B = Ag, et A = Sr avec x = z = 0,25

Avantageusement, la phase catalytique comprend l'oxyde d'au moins une terre rare et/ou d'au moins un métal de transition et l'oxyde de structure pérovskite dans une proportion perovskite/ d'au moins une terre rare et/ou d'au moins un métal de transition comprise entre 99,99/0,01 et 50/50, notamment entre 99/01 et 85/15 en volume. C'est en effet dans ces proportions relatives que la synergie entre les deux types d'oxyde est la plus sensible.

Avantageusement, l'oxyde d'au moins une terre rare et/ou d'au moins un métal de transition comprend au moins une terre rare selon un mode de réalisation.

De préférence, le filtre à particules selon l'invention comprend une quantité de phase catalytique comprise entre 5 g/litre et 250 g/litre de filtre à particules. (Le volume est exprimé en litre du volume géométrique du filtre), notamment après séchage et calcination sur le filtre de la composition catalytique.

De préférence, le filtre à particules selon l'invention est un support poreux comportant une face d'entrée et une face de sortie, ledit support étant muni parois poreuses délimitant de canaux d'entrée reliant les deux faces et obturés en face de sortie, et de canaux de sortie reliant les deux faces et obturés en face d'entrée, au moins une partie de la phase catalytique étant déposée en surface des canaux d'entrée dudit filtre.

De préférence, alternativement ou cumulativement, au moins une partie de la phase catalytique est (aussi) déposée dans la porosité des parois du substrat poreux.

Il s'est avéré que le filtre à particules selon l'invention commence à se régénérer par combustion des particules contenues dans ledit filtre dès que celui-ci atteint sensiblement 450 à 500°C voire des températures plus basses (dès 400°C). On comprend par « commence à se régénérer » le fait qu'à la température considérée on obtient au moins 5% de combustion de suies dans le filtre.

L'invention a également pour objet une ligne d'échappement d'un moteur à combustion interne qui comprend un filtre à particules tel que décrit plus haut. Elle a également pour objet un tel filtre à particules qui se régénère en continu au moins partiellement, et notamment totalement.

Dans tout le présent texte, les oxydes décrits sont susceptibles de contenir d'autres éléments, sous forme de traces ou d'impuretés.

De préférence, le substrat céramique du filtre est choisi parmi le carbure de silicium, l'alumine, le titanate d'aluminium, la cordiérite, la mullite, la cordiérite.

Le mode de réalisation préféré de l'invention utilise un substrat céramique en SiC (carbure de silicium).

D'autres caractéristiques et avantages de l'invention ressortiront de la description qui en est faite ci-après, à titre indicatif et nullement limitatif, en référence aux figures annexées, dans lesquelles :

- la figure 1 est une représentation schématique de la structure interne d'un filtre à particules équipant une ligne d'échappement d'un moteur à combustion interne d'un véhicule automobile ;

- la figure 2 est un graphe représentatif de l'activité de la phase catalytique composite de l'invention en regard d'exemples comparatifs sur des phases catalytiques prises séparément.

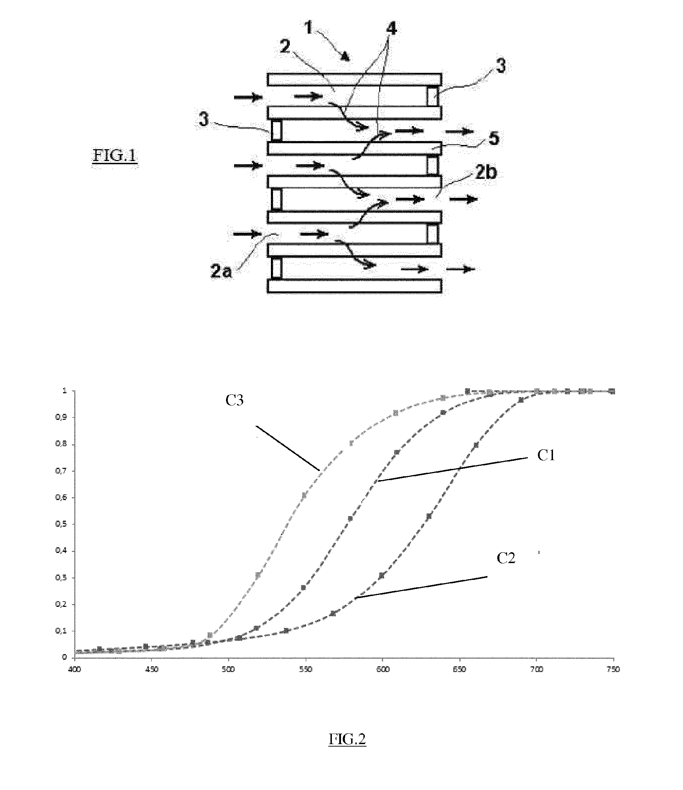

La figure 1 représente schématiquement la structure interne connue en soi d'un filtre à particules 1, filtre destiné à être monté sur une ligne d'échappement d'un moteur à combustion thermique. Un filtre à particules comprend généralement un substrat ou support céramique poreux comportant des canaux 2 parallèles. Ces derniers sont obstrués en alternance par des bouchons 3 en céramique, de manière à forcer les gaz d'échappement dont le sens de circulation est illustré par les flèches 4 à entrer par des canaux 2a d'entrée, puis traverser les parois séparatrices 5 poreuses pour ressortir par des canaux 2b de sortie des gaz d'échappement.

Dans un mode de réalisation préféré et conformément à l'exemple 3 de l'invention détaillé ci-après, le filtre à particules 1 de l'invention comprend un support céramique et une phase catalytique composite à base de la combinaison suivante:

1) oxyde mixte de zirconium et de cérium de formulation $CeZrO_2$

2) pérovskite de formulation $La_{0,5} Ag_{0,25} Sr_{0,25} MnO_3$.

Le support céramique est en SiC.

De préférence, la phase catalytique est déposée sur la surface des parois séparatrices poreuses des canaux d'entrée. Alternativement ou cumulativement, on peut aussi déposer la phase catalytique à l'intérieur des parois du filtre.

La mesure des activités catalytiques pour la combustion des suies a été réalisée sur les poudres de phase catalytique selon les trois exemples décrits plus loin, de la façon suivante : on réalise un mélange mécanique entre les phases catalytiques sous forme pulvérulente et des suies, par le biais d'une oxydation en température programmée. Celle-ci consiste à oxyder le mélange catalyseur / suies sous un flux d'oxygène et d'hélium lors d'une montée en température. La suie utilisée est du noir de carbone commercialisé sous la dénomination commerciale Printex U, qui est utilisée comme suie de référence dans nombreuses études portant sur la dépollution. Les mesures d'activités catalytiques des catalyseurs synthétisés pour l'oxydation des suies ont été réalisées dans les conditions suivantes : les catalyseurs (aussi appelé indifféremment dans le présent texte sous le terme phase catalytique) et les suies ont été mélangés dans un rapport 4:1 (en masse) à la spatule pendant 5 minutes afin obtenir un contact grossier entre la suie et les catalyseurs en poudre. Une masse de 25 mg est prélevée et placée dans un réacteur en quartz classique en U. Les conditions expérimentales des oxydations en température programmée sont : un flux de 5% d'$O_2$ dans de l'hélium à 6 L/h. Le réacteur est chauffé de la température ambiante à 750°C à une vitesse de 10°C/ min. La concentration des produits issus (CO et $CO_2$) de la combustion des suies est mesurée à l'aide d'un micro-chromatographe en phase gaz (dénomination commerciale SRA 3000) et d'un analyseur infra-rouge (dénomination commerciale HORIBA 3000). La conversion de la suie est calculée à partir des concentrations en CO et $CO_2$ et est exprimée en fonction de la température.

**Exemple 1 comparatif :** composition catalytique A à base de pérovskite seule. La pérovskite de composition $La_{0,5} Ag_{0,25} Sr_{0,25} MnO_3$ a été synthétisée par la méthode dite de complexation. Le protocole consiste à dissoudre les nitrates métalliques de lanthane, argent, strontium et manganèse dans les proportions souhaitées dans le minimum d'eau dés-ionisée. On ajoute ensuite à cette solution un agent chélatant, l'acide maléique 10%, de formule $C_4H_4O_4$. Pour favoriser la complexation des précurseurs métalliques avec l'acide maléique, le pH est maintenu à 9 par l'ajout d'ammoniac. La solution est ensuite évaporée sur une plaque chauffante jusqu'à l'obtention d'un gel puis étuvée à 130°C environ 10 heures. La poudre ainsi obtenue est calcinée à 500°C pendant 2 heures, afin d'éliminer tous les résidus carbonés liés à la synthèse. Une calcination à plus haute température, à 800°C, pendant 4 heures est ensuite nécessaire pour former la phase pérovskite et stabiliser la microstructure de la poudre.

**Exemple 2 comparatif :** composition catalytique B à base d'oxyde mixte de cérium et zirconium seul. La poudre $CeZrO_2$ est commercialisée par la société Solvay.

**Exemple 3 selon l'invention :** la composition catalytique C selon l'invention est réalisée à partir du mélange de poudres issues des exemples 1 et 2. La quantité de chaque poudre a été pesée de telle sorte à obtenir 90% en volume de pérovskite et 10% en volume de $CeZrO_2$. Les deux poudres sont ensuite introduites dans un pot en plastique auquel on ajoute des billes de zircone (pour faciliter le mélange mais qui ne participe pas à la composition catalytique de l'invention) et de l'éthanol. Le mélange est effectué à l'aide d'un mélangeur commercialisé sous la dénomination commerciale TURBULA pendant 6 heures. Puis un séchage est réalisé à l'étuve à 80°C pendant 16 heures.

La température dite T20 correspond à la température à laquelle 20% des suies incorporées dans le réacteur ont été converties en $CO_2$.

La température dite T50 correspond à la température à laquelle 50% des suies incorporées dans le réacteur ont été converties en $CO_2$.

La figure 2 présente le taux de conversion de la suie en $CO_2$ en fonction de la température pour chaque composition catalytique des exemples 1, 2 et 3. L'abscisse indique la température en °C, et l'ordonnée le taux de conversion de la suie en $CO_2$.

L'activité de la pérovskite seule de l'exemple 1 est représentée par la courbe C1. On voit que la combustion des suies ne démarre pas avant 540°C (T20). La valeur de T50 est de 575°C. Les suies sont converties uniquement en $CO_2$.

L'activité de l'oxyde mixte de formulation $CeZrO_2$ seul de l'exemple 2 est présentée par la courbe C2 : la combustion des suies ne démarre pas avant 575°C (T20). La valeur de T50 est de 625°C. Les suies sont converties à environ 99% en $CO_2$, le reste étant du CO.

L'activité catalytique de la poudre C de l'exemple 3 qui est la combinaison de l'oxyde mixte $CeZrO_2$ et de la pérovskite de l'exemple 3 est représentée par la courbe C3 : cette activité est beaucoup plus importante que celles des exemples 1 et 2. En effet, la courbe C3 montre que la combustion des suies démarre avant 500°C et que la valeur du T50 est de 540°C, au lieu de 575°C et 625°C pour les compositions catalytiques des exemples 1 et 2. La conversion des suies est en outre réalisée à 100% en $CO_2$ avec l'exemple 3. Le tableau ci-dessous récapitule les températures T20 et T50 des trois exemples tirées du graphe de la figure 2 :

|  | composition | T20 | T50 |
|---|---|---|---|
| Exemple 1 (comparatif) | pérovskite | 540°C | 575°C |
| Exemple 2 (comparatif) | $CeZrO_2$ | 575°C | 625°C |
| Exemple 3 (invention) | 90%pérovskite+ 10%$CeZrO_2$ | 510°C | 540°C |

Ces données confirment donc, de façon surprenante, que l'association de l'oxyde mixte Zr Ce et d'une pérovskite appartenant à une famille de pérovskites particulière est extrêmement efficace, et que les deux composants ont une action synergique bien supérieure à la meilleure des actions prises séparément, pour parvenir à abaisser significativement le seuil de température à partir de laquelle la combustion des suies démarre. On se rapproche ainsi des températures des gaz d'échappement habituels en régime stabilisé, ce qui permet d'envisager d'utiliser cette combinaison de composants catalytiques pour un filtre à particules qui serait apte, au moins partiellement, à s'auto-régénérer.

La synergie est obtenue parce que l''invention a réalisé un mélange intime entre les deux composants, chacun ayant une activité catalytique d'oxydation des suies par un contact physique entre les particules de suies et chacun des composants en question.

L'invention a en outre l'avantage de proposer un filtre à particules catalytique efficace bien que ne contenant pas de métaux nobles comme le platine, le palladium ou le rhodium.

Elle peut s'appliquer avantageusement pour des moteurs thermiques de type diesel ou des moteurs thermiques de type essence.

**Revendications**

1. Filtre à particules (1) comprenant un substrat filtrant en céramique poreuse et une phase catalytique, **caractérisé en ce que** la phase catalytique comprend un oxyde d'au moins une terre rare et/ou d'au moins un métal de transition et un oxyde de structure pérovskite de formulation
$La_{1-x-z} B_z A_x C O_3$ ou $La_{1-x-z} B_z A_x C_{1-y} B_y O_3$, avec :

   - A choisi parmi les métaux alcalins, alcalino-terreux et de transition,
   - C choisi parmi Mn, Fe, Ce, Cu et Mo, ou toute combinaison entre deux au moins de ces éléments,
   - B étant Ag.

2. Filtre à particules (1) selon la revendication précédente, **caractérisé en ce que** la formulation de l'oxyde de structure pérovskite respecte les indices suivants :

$$x \geq 0$$

$$1 - x - y \neq 0$$

$$1 - y \neq 0$$

$$y > 0$$

$$z > 0$$

**3.** Filtre à particules (1) selon la revendication 1, **caractérisé en ce que** la formulation de l'oxyde de structure pérovskite respecte l'indice suivant : y = 0

**4.** Filtre à particules (1) selon l'une des revendications précédentes, **caractérisé en ce que** la formulation de l'oxyde de structure pérovskite respecte l'indice suivant : x = 0

**5.** Filtre à particules (1) selon l'une des revendications 1 à 3, **caractérisé en ce que** la formulation de l'oxyde de structure pérovskite respecte l'indice suivant : x > 0, avec x de préférence d'au plus 0,5, et notamment d'au moins 0,05, et de préférence compris entre 0,1 et 0,4.

**6.** Filtre à particules (1) selon l'une des revendications précédentes, **caractérisé en ce que** l'indice y est d'au plus 0,4, et notamment d'au moins 0,001, et de préférence compris entre 0,2 et 0,3.

**7.** Filtre à particules (1) selon l'une des revendications précédentes, **caractérisé en ce que** l'indice z est d'au plus 0,4, et notamment soit d'au moins 0,001, et de préférence compris entre 0,2 et 0,3.

**8.** Filtre à particules (1) selon l'une des revendications précédentes, **caractérisé en ce que** l'oxyde d'au moins une terre rare et/ou d'au moins un métal de transition est choisi à base d'un des oxydes d'au moins un des éléments suivants : Zr, Y, Ce et tous les lanthanides, et est notamment choisi à base d'oxyde mixte du type $CeZrO_2$ ou $CePrO_2$ ou $CeO_2$.

**9.** Filtre à particules (1) selon l'une des revendications précédentes, **caractérisé en ce que** A est choisi en Sr et/ou C est choisi en Mn, et, de préférence, A est choisi en Sr et C est choisi en Mn.

**10.** Filtre à particules (1) selon l'une des revendications précédentes, **caractérisé en ce que** la formulation est $La_{1-x-z}$ $Ag_z$ $Sr_x$ $Mn_{1-y}$ $Ag_y$ $O_3$ ou $La_{1-x-z}$ $Ag_z Sr_x$ Mn $O_3$.

**11.** Filtre à particules (1) selon l'une des revendications précédentes, **caractérisé en ce que** la phase catalytique comprend l'oxyde d'au moins une terre rare et/ou d'au moins un métal de transition et l'oxyde de structure perovskite dans une proportion perovskite/ l'oxyde d'au moins une terre rare et/ou d'au moins un métal de transition comprise entre 99,99/0,01 et 50/50, notamment entre 99/01 et 85/15 en volume.

**12.** Filtre à particules (1) selon l'une des revendications précédentes, **caractérisé en ce que** la formulation de l'oxyde métallique de structure pérovskite est $La_{0,5}$ $Ag_{0,25}$ $Sr_{0,25}$ $MnO_3$.

**13.** Filtre à particules (1) selon l'une des revendications précédentes, **caractérisé en ce qu'**au moins une partie de la phase catalytique est déposée dans la porosité des parois du substrat poreux.

**14.** Ligne d'échappement d'un moteur à combustion interne, **caractérisée en ce qu'**elle comprend un filtre à particules (1) selon l'une des revendications précédentes.

**15.** Ligne d'échappement selon la revendication précédente, **caractérisé en ce que** le filtre à particules (1) est à régénération continue au moins partiellement, et notamment totalement.

FIG.1

FIG.2

Europäisches
Patentamt

European
Patent Office

Office européen
des brevets

**RAPPORT DE RECHERCHE EUROPEENNE**

Numéro de la demande

EP 15 18 1539

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 378 289 A2 (FORD GLOBAL TECH LLC [US]) 7 janvier 2004 (2004-01-07) * alinéas [0001], [0017] - [0020], [0024] - [0026], [0045] - [0048] * * revendications 1,2,4,8,9 * ----- | 1-10, 12-15 | INV. B01D53/94 B01J23/00 B01J23/10 F01N3/28 F01N3/035 |
| X | DE 10 2011 121222 A1 (GM GLOBAL TECH OPERATIONS INC [US]) 28 juin 2012 (2012-06-28) * alinéas [0007], [0010], [0021] - [0023], [0041], [0044], [0064] * ----- | 1,3,8,9, 14,15 | |
| X | FR 2 860 734 A1 (RENAULT SA [FR]) 15 avril 2005 (2005-04-15) * page 2, ligne 25 - page 5, ligne 19 * * page 6, lignes 14-20 * * exemples 1,2 * * tableau 1 * ----- | 1,3,5,8, 9,11,14, 15 | |
| X | JP 2006 068730 A (CHOKOON ZAIRYO KENKYUSHO KK) 16 mars 2006 (2006-03-16) * exemple 5 * ----- | 1,3,5,8, 9,11,14, 15 | DOMAINES TECHNIQUES RECHERCHES (IPC) B01D B01J F01N |
| A | FR 2 961 407 A1 (PEUGEOT CITROEN AUTOMOBILES SA [FR]; CENTRE NAT RECH SCIENT [FR]) 23 décembre 2011 (2011-12-23) * page 3, ligne 21 - page 4, ligne 20 * * page 6, lignes 12-19 * * exemples 1-5 * ----- | 1-15 | |

Le présent rapport a été établi pour toutes les revendications

| Lieu de la recherche | Date d'achèvement de la recherche | Examinateur |
|---|---|---|
| La Haye | 5 janvier 2016 | Hackenberg, Stefan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 18 1539

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-01-2016

| Document brevet cité au rapport de recherche | | Date de publication | Membre(s) de la famille de brevet(s) | | Date de publication |
|---|---|---|---|---|---|
| EP 1378289 | A2 | 07-01-2004 | EP | 1356864 A1 | 29-10-2003 |
| | | | EP | 1378288 A2 | 07-01-2004 |
| | | | EP | 1378289 A2 | 07-01-2004 |
| | | | JP | 2004042021 A | 12-02-2004 |
| | | | US | 2004018939 A1 | 29-01-2004 |
| | | | US | 2006100097 A1 | 11-05-2006 |
| DE 102011121222 | A1 | 28-06-2012 | CN | 102600721 A | 25-07-2012 |
| | | | DE | 102011121222 A1 | 28-06-2012 |
| | | | US | 2012159935 A1 | 28-06-2012 |
| FR 2860734 | A1 | 15-04-2005 | AUCUN | | |
| JP 2006068730 | A | 16-03-2006 | JP | 4431528 B2 | 17-03-2010 |
| | | | JP | 2006068730 A | 16-03-2006 |
| FR 2961407 | A1 | 23-12-2011 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2426326 A
- FR 2698346
- FR 2748740
- EP 2288249 A
- FR 2961407